# EUROPÄISCHE PATENTSCHRIFT

(11) **EP 1 164 091 B1**
(45) Veröffentlichungstag und Bekanntmachung des Hinweises auf die Patenterteilung: **29.12.2004**
(21) Anmeldenummer: 00115266.9
(22) Anmeldetag: 14.07.2000
(51) Int. Cl.: B65D 81/26, B32B 5/18, B32B 27/00, B29C 44/56

(54) **Verpackungsschale aus Schaumstoff und Verfahren zu ihrer Herstellung**
Foam tray and method for making it
Barquette en mousse et procédé pour sa fabrication

(30) Priorität: 13.06.2000 DE 10028386
(43) Veröffentlichungstag der Anmeldung: 19.12.2001
(73) Patentinhaber: Silver-Plastics GmbH & Co. KG, 53842 Troisdorf (DE)
(72) Erfinder: Homer, Stephan, 66663 Merzig (DE); Kremer, Ulrich, 53844 Troisdorf (DE); Rockenbach, Rolf, 53639 Königswinter (DE); Jansen, Hubert, 53797 Lohmar (DE)
(74) Vertreter: Müller-Gerbes, Margot, Dipl.-Ing.

(56) Entgegenhaltungen:
- EP-A- 0 849 309
- WO-A-99/15415
- WO-A-99/47592
- DE-A- 4 039 354
- DE-U- 8 801 585
- FR-A- 2 041 488

## Beschreibung

Die Erfindung bezieht sich auf eine aus einem Mehrschichtverbund tiefgezogene Verpackungsschale mit flüssigkeitsundurchlässigen Außenschichten in Gestalt einer Bodenschicht und einer Deckschicht mit einer dazwischen angeordneten haftfest mit den Außenschichten verbundenen saugfähigen Innenschicht, wobei zumindest in der Deckschicht durchgehende Löcher für den Durchtritt von Flüssigkeit in die saugfähige Innenschicht ausgebildet sind.

Verpackungsschalen der gattungsgemäßen Art werden insbesondere für Flüssigkeiten absondernde Produkte wie Lebensmittel, beispielsweise Fleisch, eingesetzt.

Die gattungsgemäßen Verpackungsschalen müssen unterschiedliche Anforderungen erfüllen, zum einen müssen sie ausreichend stabil sein, des weiteren sollen sie Flüssigkeiten aufsaugen, wobei erwünscht ist, daß die aufgesaugte Flüssigkeit unsichtbar für den Betrachter sowohl von der Außenseite der Schale, der Bodenschicht, als auch der inneren Seite der Schale, der Deckschicht, für einen Betrachter bleibt. Die mit den Lebensmitteln in Berührung kommenden Materialien der Verpackungsschale müssen für Lebensmittel zugelassen sein, auch soll die Verpackungsschale möglichst preiswert und wenn möglich recyclebar sein. Insbesondere sollen die Verpackungsschalen auch eine ausreichende Flüssigkeitsaufnahme in bezug auf ihre Größe aufweisen und die aufgenommenen Flüssigkeiten sollen in möglichst großer Menge in der Schale bzw. in der die Flüssigkeit aufnehmenden Innenschicht verbleiben.

Verpackungsschalen der gattungsgemäßen Art sind beispielsweise aus der GB-PS 1168925 oder der DE-OS 3442341 bekannt geworden, bei denen zwischen zwei geschlossenzelligen Polystyrol-Schaumstoffschichten als Außenschichten eine saugfähige Einlage aus Papier oder dergleichen angeordnet ist. Diese mehrschichtigen Verpackungsschalen sind infolge ihres inhomogenen Aufbaus mit Schichten aus voneinander unterschiedlichen Materialien nicht recyclebar. Des weiteren erweist sich die Haftung zwischen den Schaumstoffschichten und der Papiereinlage als mangelhaft, so daß die Schichten im Gebrauch leicht delaminieren.

Aus de DE 4039354 A1 ist eine dreischichtige Verpackungsschale, mit einer Bodenschicht aus einer geschlossenzelligen Polystyrolschaumfolie, einer Deckschicht aus einer kompakten Polystyrolfolie und einer saugfähigen Innenschicht aus einem Kunststoffvlies bekannt. Um hohe Stabilität der Verpackungsschalen zu erzielen, ist die Bodenschicht sehr dick auszuführen und um die Blickdichte für die Deckschicht zu erhalten, ist die Polystyrolfolie kräftig einzufärben, wobei jedoch ein Durchscheinen von Blutsaft möglich bleibt.

Aus der DE 4325879 A1 und EP 0849309 A1 sind Verpackungsschalen bekannt, die eine Bodenschicht aus geschlossenzelligem Schaumstoff aufweisen, eine darauf angeordnete Saugschicht aus zumindest teilweise offenzelligem Schaumstoff aus Polystyrol und hierauf einen Kunststofffilm als Deckschicht, der mit Durchbrechungen versehen ist.

In der DE 9206407 U1 wird bereits eine 3-schichtige Verpackungsschale aus drei Schichten von geschlossenzelligem Polystyrolschaumstoff vorgeschlagen, die jedoch nicht saugfähig ist. Saugfähigkeit kann durch Einlage einer vierten Schicht aus saugfähigem Vlies unterhalb der Deckschicht erreicht werden.

Aus der EP 0 849 309 A1 ist eine Verpackungsschale bekannt, die eine saugfähige Innenschicht, gebildet aus einer offenzelligen Polystyrolschaumkunststofffolie aufweist, welche ober- und unterseitig von kompakten Poylstyrolfolien abgedeckt ist, wobei sich ausgehend von der oberseitigen Polystyrolfolie Perforationen für den Flüssigkeitsdurchtritt bis in die saugfähige Innenschicht erstrecken. Eine solchermaßen ausgebildete Verpackungsschale, bestehend aus offenzelliger und damit saugfähiger Schaumkunststoff-Innenschicht, welche ober- und unterseitig mittels ungeschäumter kompakter Folien abgedeckt ist, ist im übrigen auch aus der WO 99/15415 bekannt.

Soweit für die Absorption und Adsorption der Flüssigkeit saugfähige Materialien wie Vliese, Saugeinlagen aus Papier oder Superabsorber eingesetzt werden, handelt es sich um in bezug auf das Grundmaterial der Verpackungsschale, nämlich Polystyrol, nicht sortenreine Zusammensetzungen einer mehrschichtigen Schale, die einem Recycling entgegenstehen.

Soweit für die Aufnahme von Flüssigkeiten offenzellige Schaumstoffe eingesetzt werden, stellt sich das Problem, daß offenzelliger Schaumstoff auch an offenen Oberflächen Flüssigkeit unerwünscht wieder abgeben kann. Ein kontrolliertes Aufnehmen und Halten der Flüssigkeit ist daher für eine hygienische Lebensmittelverpackung erforderlich.

Ausgehend von diesem Stand der Technik liegt der Erfindung die Aufgabe zugrunde, eine preiswerte und wirtschaftlich herstellbare mehrschichtige Verpackungsschale mit hoher Saugfähigkeit und Flüssigkeitsaufnahme sowie Stabilität und Sicherheit gegen Delaminieren der Schichten zu schaffen, die aus einheitlichen Grundmaterialien hergestellt werden kann und ausreichenden Sichtschutz bietet.

Die Erfindung löst die gestellte Aufgabe der Erfüllung der unterschiedlichen Anforderungen an eine saugfähige Verpackungsschale mit ausreichender Flüssigkeitsaufnahme und Halten der Flüssigkeit, hoher Stabilität und Sicherheit gegen Delaminieren und Festigkeit, Blickdichtigkeit und Recyclebarkeit mit einer Verpackungsschale gemäß den Merkmalen des Patentanspruches 1.

Vorteilhafte Weiterbildungen der erfindungsgemäßen Verpackungsschale sind in den Unteransprüchen angegeben.

Die erfindungsgemäße Verpackungsschale, die aus einem Mehrschichtverbund tiefgezogen ist, zeichnet sich dadurch aus, daß alle Schichten auf Basis von Styrolpolymeren in der Weise gefertigt sind, daß die beiden Außenschichten aus einer Folie aus Schaumkunststoff bzw. Schaumfolie mit geschlossenen Zellen und die Innenschicht aus einer Folie aus Schaumkunststoff bzw. Schaumfolie mit zumindest teilweise offenen Zellen gebildet ist und im Übergangsbereich von dem geschlossenzelligen Schaumkunststoff der Außenschichten zu dem offenzelligen Schaumkunststoff der Innenschicht zellige, in bezug auf die Dichte der geschäumten Folien der Außenschichten und der Innenschicht verdichtete Grenzschichten ausgebildet sind.

Die erfindungsgemäße Verpackungsschale ermöglicht aufgrund des Einsatzes eines einheitlichen Materials, nämlich Polystyrol, die Herstellung eines Mehrschichtverbundes durch Laminieren, der eine ausreichende Haftfestigkeit aufweist, wodurch das Delaminieren der Verpackungsschale im Randbereich verhindert wird und diese komplett recyclebar ist.

Die erfindungsgemäße Verpackungsschale zeichnet sich infolge des erfindungsgemäß ausgebildeten Mehrschichtverbundes durch hohe Stabilität und Festigkeit aus, wobei hierzu auch die im Inneren der Verpackungsschale ausgebildeten Grenzschichten beitragen. Zugleich zeichnet sich die erfindungsgemäße Verpackungsschale durch den Einsatz von geschlossenzelligen Schaumstoffschichten auf den Außenseiten derselben infolge der dadurch bewirkten Lichtbrechung durch eine hohe Blickdichte gegen sich ansammelnde Flüssigkeit, wie beispielsweise Blutsaft von Fleisch in der Innenschicht der Verpackungsschale aus.

Für die einzelnen Schaumschichten der Verpackungsschale werden Schaumfolien auf Basis Polystyrol eingesetzt, hierunter werden sowohl die Homo- und Copolymere des Styrols verstanden, ebenso auch Mischungen oder Blends des Polystyrols mit anderen Stoffen, ebenso die durch Polymerisation von Styrol durch Wärme oder mit Peroxyd-Katalysatoren hergestellten hochmolekularen Stoffe, wie die durch SubstanzPolymerisation hergestellten Produkte, ebenso die Copolymerisate des Styrols mit Acrylnitril und/oder Butadien bzw. Acrylnitril und Acrylestern bzw. die Pfropf-Polymerisate, bei denen Styrol unter Zugabe von natürlichem oder synthetischem Kautschuk polymerisiert, wie Styrol-Butadien-Kautschuk. Bevorzugt werden für die erfindungsgemäßen Verpackungsschalen Schaumfolien auf Basis von Styrol-Homopolymerisaten eingesetzt.

Für die Außenschichten werden geschlossenzellige Schaumfolien eingesetzt, die als Ausgangsstoffe auf 100 Gew.-Teile Polystyrol 5 bis 8 Gew.-Teile Treibmittel aus der Gruppe n-Butan, n-Pentan, Iso-Pentan einzeln oder in Abmischungen und 0,3 bis 0,6 Gew.-Teile eines Nukleierungsmittels aus der Gruppe von Natriumbicarbonat, Zitronensäure, Talk, Natriumcarbonat einzeln oder in Abmischungen, insbesondere Zitronensäure und Natriumbicarbonat, enthalten. Für die geschlossenzelligen Außenschichten werden bevorzugt Polystyrolschaumfolien mit einer Dicke von 0,5 bis 1,5 mm und einer Dichte von 50 bis 150 kg/m³, vorzugsweise 50 bis 100 kg/m³ eingesetzt.

Für die Innenschicht wird erfindungsgemäß eine zumindest teilweise offenzellige Polystyrolschaumfolie eingesetzt, enthaltend auf 100 Gew.-Teile Polystyrol, 3 bis 4 Gew.-Teile Treibmittel, ausgewählt aus der Gruppe n-Butan, n-Pentan, Iso-Pentan einzeln oder in Abmischung, insbesondere n-Butan sowie 0,6 bis 1,5 Gew.-Teile eines Nukleierungsmittels, ausgewählt aus der Gruppe Natriumbicarbonat, Zitronensäure, Natriumcarbonat und Talk einzeln oder in Abmischungen, insbesondere Natriumbicarbonat und Zitronensäure mit einer Zersetzungstemperatur über 160° C und 1,0 bis 3,5 Gew.-Teile eines in polaren Substanzen wie Polystyrol gut wirksamen Tensids, wie anionischen, kationischen oder amphoteren Tensids und 1 bis 3 Gew.-Teile eines mit Polystyrol nicht mischbaren Fremdpolymers auf Basis von Polyolefinen. Insbesondere werden polymergebundene Nukleierungsmittel auf Basis von Natriumbicarbonat und Zitronensäure, mit einem Polymerbindemittel auf Basis eines Acrylatpolymerisats bevorzugt, wobei ein Verhältnis von Nukleierungsmittel zu Polymerbindemittel im Bereich von 55 zu 45 bis zu 65 zu 35 bevorzugt ist. Als Fremdpolymer werden bevorzugt reine Polymere, wie Ethylen-Vinyl-Acetat, Polypropylen oder Polyethylen, bevorzugt HDPE in Granulatform oder auch Polyolefin-Wachse eingesetzt.

Für die Innenschicht der Verpackungsschalen werden Schaumfolien mit einer Dicke von 1 bis 4 mm und einer Dichte von 50 bis 90 kg/m³ eingesetzt, wobei bevorzugt die Dicke der für die Innenschicht eingesetzten Schaumfolie das 2- bis 4-fache der Dicke der für die Außenschichten eingesetzten Schaumfolie beträgt.

Die erfindungsgemäßen dreischichtigen Verpackungsschalen aus einem Verbund von geschlossenzelligen und zumindest teilweise offenzelligen Schaumfolien auf Basis Polystyrol weisen bevorzugt ein Flächengewicht von 280 bis 500 g/m² insbesondere 300 bis 450 g/m² auf.

Die Verpackungsschale wird aus einem Mehrschichtverbund durch Tiefziehen hergestellt, wobei in dem Mehrschichtverbund für beide Außenschichten, d.h. die Deckschicht und die Bodenschicht, bevorzugt die gleiche Schaumfolie eingesetzt ist. Die Dicken der eingesetzten Schaumfolien für die Außenschichten und die Innenschicht werden sowohl durch die Herstellung des Mehrschichtverbundes in einem ersten Schritt als auch durch das nachfolgende Tiefziehen des Mehrschichtverbundes zu der Verpackungsschale in ihrer Dicke etwas verringert, wobei gleichzeitig die Grenzschichten zwischen den Außenschichten und der Innenschicht ausgebildet werden.

Erfindungsgemäß erhält man eine Verpackungsschale mit Dreischichtenaufbau, die komplett geschäumt ist, wobei die Außenschichten aus geschäumtem Polystyrol eine bessere Blickdichte gegenüber kompakten Polystyrolfolien, die eingefärbt werden müssen, in Folge der in einer zellulären Struktur geänderten Lichttransmission aufweisen. Von der erfindungsgemäßen Verpackungsschale aufgenommene farbige Flüssigkeiten, wie Fleischsäfte, Blut, sind von daher auch ohne Einfärbung der Verpackungsschale von außen nicht sichtbar.

Eine ausreichende Saugfähigkeit der erfindungsgemäßen Verpackungsschale wird durch die teilweise offenzellige Innenschicht aus einer Polystyrolschaumfolie ermöglicht, wobei die Anzahl der offenen Zellen der Innenschicht durch das Herstellungsverfahren, d.h. einerseits durch die Extrusionstemperaturen, andererseits durch Zusatz von Fremdpolymer in geringen Mengen, Auswahl des Nukleierungsmittels und ggf. Zugabe eines Tensids beeinflußbar sind.

Um die Aufnahmefähigkeit für Flüssigkeiten, insbesondere wässrige Flüssigkeiten der teilweise offenzelligen Innenschicht zu erhöhen, wird ein Tensid, das zugleich auch hygroskopisch wirkt, beispielsweise auf Basis von Alkansulfonaten, eingesetzt.

Die erfindungsgemäßen Verpackungsschalen weisen eine Flüssigkeitsaufnahme auf, die dem 2- bis 10-fachen des Gewichtes der Verpackungsschale je nach den Anforderungen des Verpackungsgutes entspricht.

Eine weitere Erhöhung der Stabilität der Verpackungsschale wird durch ihre Gestalt erreicht, indem die Bodenschicht auf ihrer Außenseite einen nach innen gewölbten zentralen Bodenbereich aufweist, der durch eine stärkere Verformung erzielt wird. Der nach innen gewölbte zentrale Bodenbereich mit ebener Fläche erweist sich als vorteilhaft für das Handling der Verpackungsschale, da eine definierte ebene Fläche im Bodenbereich für das Ergreifen mit einem Vakuumsauger und genaue Platzieren das Verpacken erleichtert, insbesondere wenn das Verpacken automatisiert erfolgt.

Darüber hinaus zeichnet sich die erfindungsgemäße mehrschichtige Verpackungsschale dadurch aus, daß am Außenumfang anschließend an den Außenrand der Verpackungsschale in die Bodenschicht, d.h. in die die Außenschicht bildende Bodenschicht mindestens zwei wulstartig vorstehende, parallel zum Außenumfang umlaufende Rippen eingeformt sind, die in ihrer Breite und Höhe abgestuft in Richtung auf den Bodenbereich abnehmend ausgebildet sind. Diese Rippen erleichtern das Abnehmen der Verpackungsschale aus Stapeln.

Darüber hinaus ist es möglich, bei der erfindungsgemäßen Verpackungsschale die eingesetzten Schaumfolien statt aus reinem Polystyrol-Frischmaterial auch mit Polystyrol-Regenerat herzustellen, wobei ein Polystyrol-Regeneratanteil von bis zu 50 % zum Frischmaterial bevorzugt ist. Auf diese Weise kann eine zweckmäßige Wiederverwendung von Styrolpolymerisatabfällen erfolgen, die bereits bei der Herstellung der Verpackungsschalen im Tiefziehprozeß als Abfälle der eingesetzten Schaumfolien anfallen.

Zumindest teilweise offenzellige Schaumfolien aus Styrolpolymerisaten, die für die erfindungsgemäße Verpackungsschale eingesetzt werden, können beispielsweise gemäß den Verfahrensschritten des Anspruches 15 hergestellt werden. Es ist aber auch möglich, derartige Schaumfolien auf sogenannten Tandemanlagen zu extrudieren. Geschlossenzellige Polystyrolschaumfolien werden in bekannter Weise hergestellt.

Erfindungsgemäß wird ein Mehrschichtverbund aus zwei Außenschichten von geschlossenzelligen Polystyrolschaumfolien und einer Innenschicht aus zumindest teilweise offenzelliger Polystyrolschaumfolie hergestellt. Hierbei wird die die Innenschicht bildende, zumindest teilweise offenzellige Schaumfolie zwischen der jeweils eine Außenschicht bildenden Deckschicht und Bodenschicht angeordnet und alle Schaumfolien werden einem aus zwei Walzen gebildeten Verbindungsspalt zugeführt. Vor dem Einlaufen in den Verbindungsspalt werden die einander zugewandten Oberflächen der Deckschicht und Innenschicht bzw. Innenschicht und Bodenschicht mittels Heißluft zwischen 350° C und 450° C plastifiziert und angeschmolzen. Beim nachfolgenden Durchlaufen des Verbindungsspaltes werden die Schaumfolien zu dem Mehrschichtverbund laminiert, wobei die Grenzschichten zwischen Innenschicht und Deckschicht bzw. Innenschicht und Bodenschicht durch Verdichtung der zelligen, insbesondere der teilweise offenzelligen Schaumstrukturen, die angeschmolzen sind, ausgebildet werden. Danach wird der Mehrschichtverbund auf seiner von der Deckschicht gebildeten Seite über eine Nadelwalze geführt und es werden kleine Löcher, die die Deckschicht durchsetzen und innerhalb der angrenzenden Innenschicht enden, erzeugt. Im Anschluß daran wird der mit den Löchern ausgerüstete Mehrschichtverbund unter Anwärmen auf eine zum Tiefziehen ausreichende Temperatur einem Formwerkzeug für die Verpackungsschale zugeführt und die Verpackungsschalen werden durch Tiefziehen unter Anwendung von Druck hergestellt. Zum Zwecke einer rationellen Herstellung der erfindungsgemäßen Verpackungsschalen werden hierbei bevorzugt Mehrfach-Formwerkzeuge eingesetzt, die mehrere Verpackungsschalen gleichzeitig erzeugen.

Die Grenzschichten, die sich im Mehrschichtverbund der Verpackungsschale ausgebildet haben, weisen eine Dicke von etwa 10 bis 15 % bezogen auf die Dicke der eingesetzten zumindest teilweise offenzelligen Schaumfolie für die Innenschicht auf. Bevorzugt wird für die Deckschicht und die Bodenschicht die gleiche Schaumfolie eingesetzt, wobei die Schaumfolien für die Deckschicht und die Bodenschicht im Querschnitt betrachtet in bezug auf ihre Herstellung mit Außenseite und Innenseite spiegelbildlich im Mehrschichtverbund angeordnet werden.

Zum Herstellen der erfindungsgemäßen Ausgestaltung der Verpackungsschale mit eingezogenem Bodenbereich und wulstartigen Rippen werden Mehrfachformwerkzeuge mit Patrize und Matrize eingesetzt, die im Bereich der Matrize mit ausgearbeiteten Rillen für die Ausbildung der wulstartigen Rippen ausgebildet sind, wobei im Bereich der Rillen während des Tiefziehens des Mehrschichtverbundes Unterdruck erzeugt wird. Die dort anliegende Bodenschicht wird aufgrund des Unterdrucks in die Rillen gezogen und die wulstartigen Rippen bilden sich in der anliegenden Bodenschicht unter bereichsweiser Ablösung der Bodenschicht von der Innenschicht aus. Der eingezogene Bodenbereich der Verpackungsschale wird durch eine entsprechende Verdichtung der Bodenschicht erreicht, wovon jedoch die Innenschicht und die Deckschicht nicht betroffen sind.

Die Erfindung wird nachfolgend an Ausführungsbeispielen erläutert und in der Zeichnung dargestellt.

Es zeigen:
- **Figur 1:**: eine tiefgezogene Verpackungsschale gemäß der Erfindung,
- **Figur 2:**: den Teilschnitt AA nach Figur 1 durch die Verpackungsschale,
- **Figur 3:**: eine schematische Darstellung des Schichtenaufbaus der Verpackungsschale,
- **Figur 4:**: einen vergrößerten Schnitt durch die Verpackungsschale, die den Schaumstoffverbund zeigt,
- **Figur 5:**: eine vergrößerte auszugsweise Darstellung der teilweise offenzelligen Innenschicht des Verbundes gemäß Figur 4,
- **Figur 6:**: das Detail D in Vergrößerung gemäß Figur 2 der Verpackungsschale,
- **Figur 7:**: Unteransicht der Verpackungsschale nach Figur 1,
- **Figur 8:**: eine schematische Darstellung der Herstellung des Mehrschichtverbundes für die Verpackungsschale.

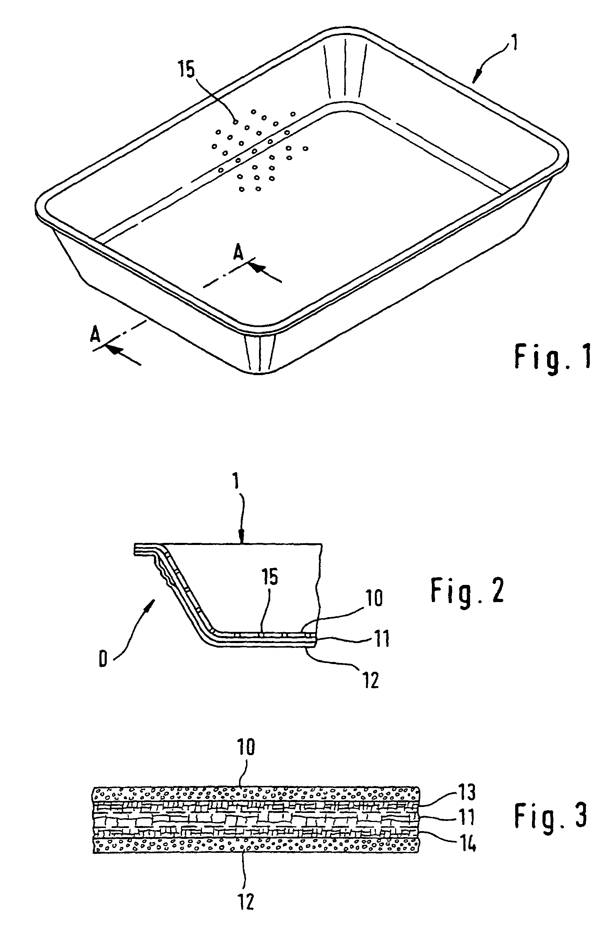

In der Figur 1 ist eine mehrschichtige Verpackungsschale 1 mit einem flachen Bodenteil und einem umlaufenden hochgezogenen Seitenrand in etwa rechteckiger Grundform dargestellt. Die Verpackungsschale weist auf ihrer Innenseite, d.h. der Deckschicht eine Vielzahl von kleinen Löchern 15 auf. Diese Löcher oder Durchbrüche können in unterschiedlicher Größe und Anordnung sowohl auf dem Innenboden als auch dem hochgezogenen Seitenrand vorgesehen werden.

In der Figur 2 ist der schematische Aufbau der Verpackungsschale 1 im Querschnitt AA dargestellt. Die beiden Außenschichten 12, 10, nämlich die Bodenschicht 12 und die Deckschicht 10, sind aus einer geschlossenzelligen Polystyrolschaumfolie gefertigt, die dazwischen angeordnete Innenschicht 11 ist aus zumindest teilweise offenzelliger Polystyrolschaumfolie gefertigt. Die drei Schichten sind durch Laminieren miteinander zu einem Mehrschichtverbund verbunden, der unter weiterer Anwendung von Druck und Wärme zu der Verpackungsschale im Tiefziehverfahren geformt wird. Durch die Herstellung des Mehrschichtverbundes und die Verformung werden zwischen den Außenschichten 10, 12 und der Innenschicht 11 Grenzschichten 13, 14 ausgebildet, die eine zellige und gegenüber den anliegenden Schaumschichten verdichtete Struktur aufweisen, wie in der Figur 3 nochmals schematisch dargestellt ist. Die Deckschicht 10 wird von den Löchern 15 durchdrungen, die zumindest bis in die Innenschicht 11 reichen, jedoch diese nicht vollständig durchdringen. Auf diese Weise ist das Aufsaugen von Flüssigkeit, die sich auf der Deckschicht 10 ansammelt, in die zumindest teilweise offenzellige Innenschicht 11 ermöglicht.

An der Außenseite der Verpackungsschale 1 sind anschließend an den oberen Rand in die die Bodenschicht 12 bildende Außenschicht bevorzugt drei wulstartige Rippen 16, 17, 18 eingeformt, wobei diese durch eine entsprechende Formgebung des Tiefziehwerkzeuges unter Anlegung von Vakuum erzeugt werden. Die Bodenschicht 12 wird hierbei bereichsweise im Bereich der Ausbildung der Wulste von der Innenschicht 11 abgelöst. Wesentlich ist, daß die drei wulstartigen Rippen 16, 17, 18 in Richtung auf den Boden der Verpackungsschale 1 hin abnehmend ausgebildet sind, d.h. sowohl in bezug auf ihre Höhe der Auswölbung als auch in bezug auf ihre Breite. Die Breiten C1, C2, C3 nehmen in Richtung auf den Boden hin ab, ebenso die Höhen der Rippen. Dies erleichtert das Entnehmen der in Stapeln aufgelagerten Verpackungsschalen für die weitere Verwendung.

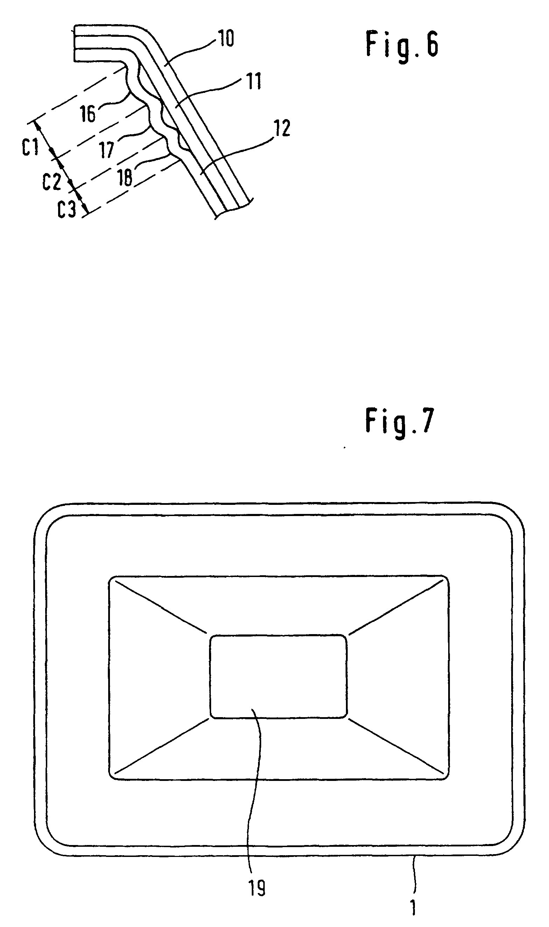

In der Figur 7 ist die Unteransicht auf die Verpackungsschale nach Figur 1 dargestellt, aus der die Ausbildung eines eingezogenen Bodens mit flachem eingezogenen Bereich 19 ersichtlich ist, wodurch wiederum das Handling der Verpackungsschale 1, beispielsweise das genaue Erfassen und Transportieren mit einem Saugstempel erleichtert wird.

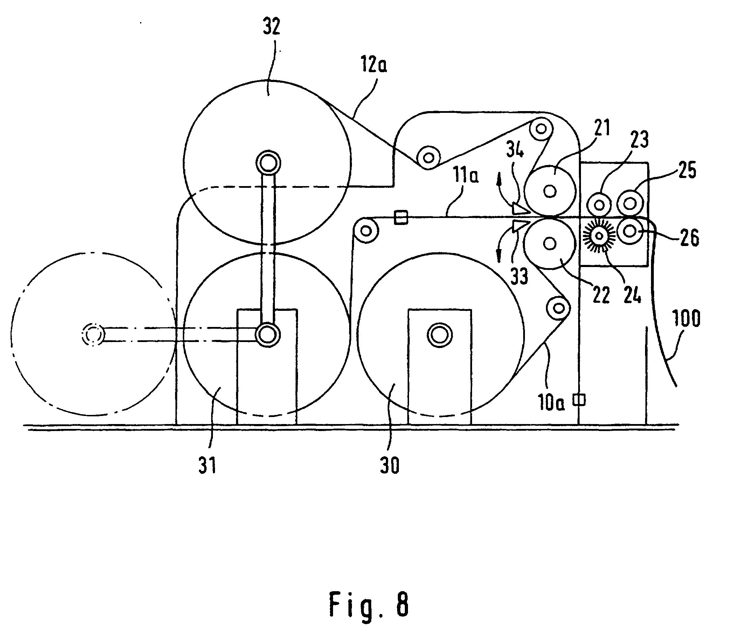

In der Figur 8 ist schematisch dargestellt, wie der Mehrschichtverbund hergestellt wird. Die geschlossenzelligen Schaumfolien 10a bzw. 12a für die Außenschichten 10, 12 werden von Rollen 30 bzw. 31 abgezogen und über nicht näher bezeichnete Umlenkwalzen einem von den Walzen 21, 22 gebildeten Laminier- bzw. Verbindungsspalt zugeführt. Zwischen die beiden Außenschichten wird die die Innenschicht 11 bildende teilweise offenzellige Schaumfolie 11a von einer Rolle 31 ebenfalls dem Verbindungsspalt zwischen den beiden Außenschichten zugeführt. Kurz vor Einlauf in den Verbindungsspalt werden die einander zugekehrten Seiten der Außenschichten und Innenschicht mittels Heißluft von 350 bis 450° C angeschmolzen, so daß beim Durchlaufen des zwischen den Walzen 21, 22 gebildeten Verbindungsspaltes unter Druck der haftfeste Verbund hergestellt wird, der nachfolgend mit der die Deckschicht bildenden Seite über die Nadelwalze 24 mit Gegendruckwalze 23 geführt wird, wobei die Deckschicht bis zur Innenschicht gelocht wird. Der so mit Löchern versehene Mehrschichtverbund 100 wird dann über das Walzenpaar 25, 26 abgezogen und aufgewickelt oder direkt einer Tiefzieheinrichtung zugeführt.

### Ausführungsbeispiel:

Für die Außenschichten 10, 12 der Verpackungsschale wird eine offenzellige Polystyrolschaumfolie eingesetzt, die aus Styrol-Homopolymer und Styrol-Polymerisat-Regenerat im Verhältnis 60 zu 40 Gewichtsteilen sowie 6,5 Gewichtsteilen Treibmittel aus einer Mischung von 70 Gew.-% n-Pentan und 30 Gew.-% i-Pentan sowie 0,4 Gewichtsteilen Nukleierungsmittel Zitronensäure und Natriumbicarbonat im Extrusionsverfahren hergestellt wurde. Die geschlossenzellige Schaumfolie weist eine Dicke von 1 mm und ein Flächengewicht von 100 g/m² auf.

Eine Schaumfolie für die Innenschicht 11 mit teilweise offenzelliger Struktur wird aus einer Rezeptur von 100 Gewichtsteilen Styrol-Homopolymer, 3,5 Gewichtsteilen n-Butan, 1,4 Gewichtsteilen Nukleierungsmittel, enthaltend 55 Gew.-% Zitronensäure und Bicarbonat mit einer Zersetzungstemperatur höher als 160° C, und 45 Gew.-% Acrylat-Polymer-Bindemittel und 2,5 Gewichtsteilen Tensid wie Alkylsulfonat, und 1,9 Gewichtsteilen eines HDPE-Granulates hergestellt.

Aus den vorgenannten Materialien, jedoch noch ohne Butan, wird eine Mischung hergestellt, die in einem Doppelschneckenextruder aufgeschmolzen wird, wobei in die Schmelze das n-Butan unter einem Druck von 65 bar injiziert wird. Die so erhaltene schäumfähige geschmolzene Masse mit einer Temperatur von etwa 167 ° C und einem Druck von 40 bar wird durch eine Ringdüse extrudiert und unter Aufschäumung über einen Kalibrierdorn gezogen, nach dem Abkühlen aufgeschnitten und flach gelegt. Die erhaltene Schaumfolie weist eine Dicke von 2,5 mm, ein Raumgewicht von 0,07 g/cm³ und eine teilweise offenzelliger Struktur mit einem mittleren Durchmesser der Zellen von 500 bis 700 mm auf.

Aus den vorgenannten Schaumfolien wird nachfolgend der Mehrschichtverbund mit äußeren Schichten, die die Deckschicht 10 und die Bodenschicht 12 bilden, aus geschlossenzelliger Polystyrolschaumfolie und der Innenschicht 11 aus der teilweise offenzelligen Polystyrolschaumfolie durch Laminieren hergestellt, wobei die einander zugewandten, miteinander zu verbindenden Oberflächen der Schaumfolien mittels Heißluft von 350 bis 450° C plastifiziert und nachfolgend beim Durchlaufen durch einen Walzenspalt bei geringem Druck miteinander verbunden werden.

Danach wird der Mehrschichtverbund einer Tiefziehanlage zugeführt und nach Vorwärmung mittels der Tiefziehwerkzeuge zu den gewünschten Verpackungsschalen verformt.

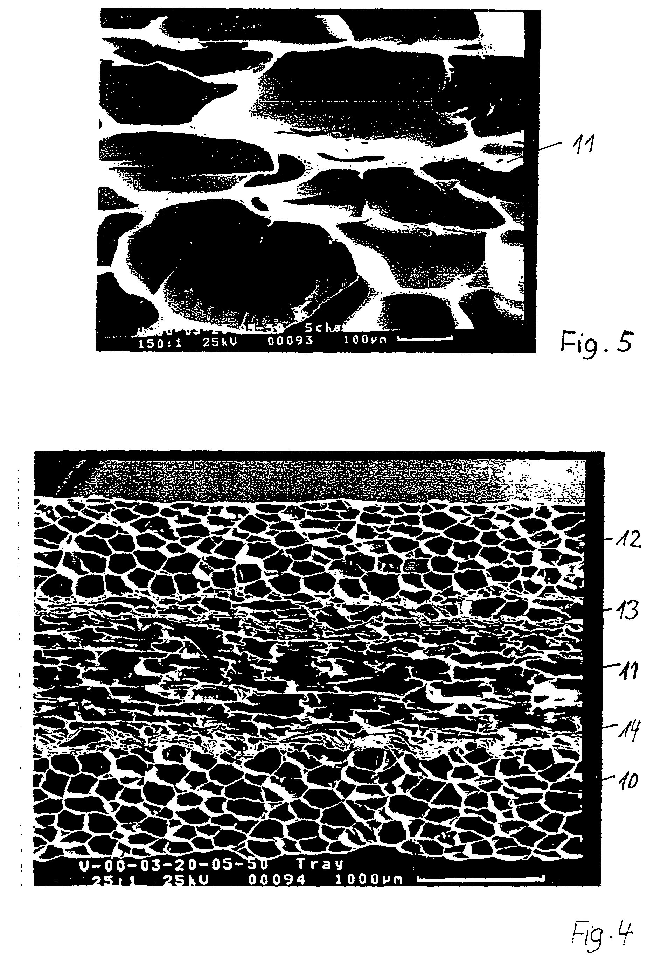

Hierbei werden aus dem Verbund Verpackungsschalen mit einem Flächengewicht von 375 g/m² erhalten. Die Verpackungsschalen weisen eine Schaumstruktur, im Querschnitt betrachtet wie in den Aufnahmen gemäß der Figur 4 auf, wobei der Maßstab 3 cm entsprechend 1000 µm ist. Es sind die Bodenschicht 12 und Deckschicht 10 sowie die verbleibende Innenschicht 11 mit den Grenzschichten 13 und 14 deutlich erkennbar, ebenso die teilweise Offenzelligkeit der Innenschicht 11 sowie die durch die Laminierung und das Tiefziehen stark komprimierten Grenzschichten im Gegensatz zu den im wesentlichen unverändert gebliebenen geschlossenzelligen Außenschichten 10, 12 mit im wesentlichen erhaltener originärer Zellstruktur.

In der Figur 5 ist ein vergrößerter Ausschnitt aus der Innenschicht 11 gemäß Figur 4 mit teilweise offenzelliger Zellstruktur dargestellt, wobei dem Maßstab 1 cm 100 µm entsprechen.

## Patentansprüche

1. Verpackungsschale, tiefgezogen aus einem Mehrschichtverbund mit flüssigkeitsundurchlässigen Außenschichten in Gestalt einer Bodenschicht und einer Deckschicht, mit einer dazwischen angeordneten haftfest mit den Außenschichten verbundenen saugfähigen Innenschicht, wobei zumindest in der Deckschicht durchgehende Löcher für den Durchtritt von Flüssigkeit in die saugfähige Innenschicht ausgebildet sind, und alle Schichten auf Basis von Styrolpolymeren gefertigt sind, **dadurch gekennzeichnet, daß** die beiden Außenschichten aus Folien aus Schaumkunststoff mit geschlossenen Zellen und die Innenschicht aus einer Folie aus Schaumkunststoff mit zumindest teilweise offenen Zellen gebildet ist und im Übergangsbereich von dem geschlossenzelligen Schaumkunststoff der Außenschichten zu dem offenzelligen Schaumkunststoff der Innenschicht zellige, in bezug auf die Dichte der geschäumten Folien der Außenschichten und der Innenschicht verdichtete Grenzschichten ausgebildet sind, die eine Dicke von etwa 10 - 15% bezogen auf die Dicke der eingesetzten Folie zur Ausbildung der Innenschicht aufweisen.

2. Verpackungsschale nach Anspruch 1, **dadurch gekennzeichnet, daß** die Außenschichten blickdicht in bezug auf die Innenschicht sind.

3. Verpackungsschale nach Anspruch 1 oder 2, **dadurch gekennzeichnet, daß** sie ein Flächengewicht von 280 bis 500 g/m² insbesondere 300 bis 450 g/m² aufweist.

4. Verpackungsschale nach einem der Ansprüche 1 bis 3, **dadurch gekennzeichnet, daß** für die Außenschichten eine geschlossenzellige Schaumfolie mit einer Dicke von 0,5 bis 1,5 mm und einer Dichte von 50 bis 150 kg/m³, vorzugsweise 50 bis 100 kg/m³ eingesetzt ist.

5. Verpackungsschale nach einem der Ansprüche 1 bis 4, **dadurch gekennzeichnet, daß** für die Innenschicht eine zumindest teilweise offenzellige Schaumfolie mit einer Dicke von 1 bis 4 mm und einer Dichte von 50 bis 90 kg/m³ eingesetzt ist.

6. Verpackungsschale nach einem der Ansprüche 1 bis 5, **dadurch gekennzeichnet, daß** die Dicke der für die Innenschicht eingesetzten Schaumfolie das 2- bis 4-fache der Dicke der für die Außenschichten eingesetzten Schaumfolie beträgt.

7. Verpackungsschale nach einem der Ansprüche 1 bis 6, **dadurch gekennzeichnet, daß** für beide Außenschichten die gleiche Schaumfolie eingesetzt ist.

8. Verpackungsschale nach einem der Ansprüche 1 bis 7, **dadurch gekennzeichnet, daß** die zumindest teilweise offenzellige Innenschicht aus einer Schaumfolie enthaltend auf:
100 Gew.-Teile Polystyrol
3 bis 4 Gew.-Teile Treibmittel ausgewählt aus der Gruppe n-Butan, n-Pentan, Iso-Pentan oder Mischungen hiervon,
0,6 bis 1,5 Gew.-Teile Nukleierungsmittel aus Natriumbicarbonat und Zitronensäure mit einer Zersetzungstemperatur > 160° C,
1,0 bis 3,5 Gew.-Teile eines in polaren Substanzen wie Polystyrol gut wirksamen Tensids, und
1 bis 3 Gew.-Teile eines mit Polystyrol nicht mischbaren Fremdpolymers, wie eines Polyolefins oder EVA,
hergestellt ist.

9. Verpackungsschale nach Anspruch 8, **dadurch gekennzeichnet, daß** das Nukleierungsmittel zusammen mit einem ein Polymer-Bindemittel auf Basis eines Acrylatpolymerisates im Verhältnis von 55 zu 45 bis 65 zu 35 Nukleierungsmittel zu Polymer-Bindemittel eingesetzt ist.

10. Verpackungsschale nach einem der Ansprüche 1 bis 9, **dadurch gekennzeichnet, daß** die zumindest teilweise offenzellige Schaumfolie als Tensid 1 bis 3 Gew.-Teile eines Alkansulfonates auf 100 Gew.-Teile Polystyrol enthält.

11. Verpackungsschale nach einem der Ansprüche 1 bis 10, **dadurch gekennzeichnet, daß** für die Außenschichten eine geschlossenzellige Schaumfolie eingesetzt ist, die als Ausgangsstoffe auf 100 Gew.-Teile Polystyrol
5 bis 8 Gew.-Teile Treibmittel aus der Gruppe n-Butan, n-Pentan, Iso-Pentan einzeln oder in Abmischungen und
0,3 bis 0,6 Gew.-Teile eines Nukleierungsmittels auf Basis Zitronensäure und Natriumbicarbonat enthält.

12. Verpackungsschale nach einem der Ansprüche 1 bis 11, **dadurch gekennzeichnet, daß** das für die Herstellung der geschlossenzelligen Schaumfolien für die Außenschichten und/oder der zumindest teilweise offenzelligen Schaumfolie für die Innenschicht eingesetzte Polystyrol bis zu 50 Gew.-% eines Regeneratpolystyrols anstelle von Frischmaterial enthält.

13. Verpackungsschale nach einem der Ansprüche 1 bis 12, **dadurch gekennzeichnet, daß** die Bodenschicht auf ihrer Außenseite einen nach innen gewölbten zentralen Bodenbereich mit ebener Fläche aufweist.

14. Verpackungsschale nach einem der Ansprüche 1 bis 13, **dadurch gekennzeichnet, daß** am Außenumfang anschließend an den Außenrand der Verpackungsschale in die Bodenschicht mindestens zwei wulstartige parallel vorstehende zum Außenumfang umlaufende Rippen eingeformt sind, die in ihrer Breite und Höhe abgestuft in Richtung auf den Bodenbereich abnehmend ausgebildet sind.

15. Verfahren zum Herstellen einer Verpackungsschale gemäß einem der Ansprüche 1 bis 14, **dadurch gekennzeichnet, daß** in einem ersten Schritt ein Gemisch enthaltend auf 100 Gew.-Teile Polystyrol,
1 bis 2,5 Gew.-Teile eines polymergebundenen Nukleierungsmittels auf Basis Natriumbicarbonat und Zitronensäure,
1,0 bis 3,5 Gew.-Teile eines Tensids und
1 bis 3 Gew.-Teile eines mit Polystyrol nicht mischbaren Fremdpolymers,
in einem Doppelschneckenextruder mit gleichsinnig rotierenden Schnecken bei einer Temperatur bis zu 270° C aufgeschmolzen und
3 bis 4 Gew.-% Treibmittel, insbesondere n-Butan bezogen auf die eingesetzt Menge des Polystyrols unter Druck von 30 bis 150 bar in die Polymerschmelze injiziert und die Polymerschmelze unter homogener Vermischung auf eine Massetemperatur zwischen 160 bis 180 ° C vor Austritt aus dem Doppelschneckenextruder in das Düsenwerkzeug mit ringförmiger Düse gebracht wird und unter Druck von bis zu 55 bar als Schlauch aus der Düse in Atmosphäre extrudiert wird, der Schlauch unter Aufschäumung über einen Kalibrierdorn gezogen wird und nach dem Abkühlen aufgeschnitten und flach gelegt wird, wobei eine einschichtige Schaumfolie einer Dicke von 1 bis 4 mm und einer Dichte von 50 bis 90 kg/m³ mit teilweise offenzelliger Struktur erhalten wird und nachfolgend in einem zweiten Schritt für die Deckschicht und die Bodenschicht je eine geschlossenzellige Schaumfolie aus einem Styrolpolymer eingesetzt wird und die zumindest teilweise offenzellige Schaumfolie als Innenschicht zwischen den die Außenschichten bildenden Deckschicht und Bodenschicht angeordnet wird und alle Schaumfolien einem aus zwei Walzen gebildeten Verbindungsspalt zugeführt werden und vor dem Einlaufen in den Verbindungsspalt die einander zugewandten Oberflächen der Deckschicht und Innenschicht bzw. Innenschicht und Bodenschicht mittels Heißluft zwischen 350° C und 450° C plastifiziert und angeschmolzen werden, und beim Durchlaufen des Verbindungsspaltes die Schaumfolien zu dem Mehrschichtverbund laminiert werden unter Ausbildung der Grenzschichten zwischen Innenschicht und Deckschicht bzw. Innenschicht und Bodenschicht durch Verdichtung der zelligen, insbesondere der teilweise offenzelligen Schaumstrukturen, danach der Mehrschichtverbund auf seiner von der Deckschicht gebildeten Seite über eine Nadelwalze geführt und kleine Löcher, die die Deckschicht durchsetzen und innerhalb der angrenzenden Innenschicht enden, erzeugt werden und der mit den Löchern ausgerüstete Mehrschichtverbund unter Anwärmung auf eine zum Tiefziehen ausreichende Temperatur einem Formwerkzeug für die Verpackungsschalen zugeführt wird und die Verpackungsschalen durch Tiefziehen unter Anwendung von Druck hergestellt werden, wobei die Grenzschichten eine Dicke von etwa 10-15% bezogen auf die Dicke der eingesetzten Folie zur Ausbildung der Innenschicht aufweisen.

16. Verfahren zum Herstellen einer Verpackungsschale nach Anspruch 15, **dadurch gekennzeichnet, daß** für die Deckschicht und die Bodenschicht gleiche Schaumfolien eingesetzt werden, wobei die Schaumfolie für die Deckschicht und die Bodenschicht im Querschnitt betrachtet in bezug auf ihre Herstellung spiegelbildlich im Mehrschichtverbund angeordnet werden.

17. Verfahren nach einem der Ansprüche 15 oder 16, **dadurch gekennzeichnet, daß** ein Mehrfach-Formwerkzeug für die Verpackungsschale mit Matrize und Patrize eingesetzt wird, das im Bereich der Matrize mit ausgearbeiteten Rillen für die Ausbildung von wulstartigen Rippen am Außenumfang der Verpackungsschale ausgebildet ist, und im Bereich der Rillen während des Tiefziehens des Mehrschichtverbundes Unterdruck erzeugt wird und die wulstartigen Rippen an der anliegenden Bodenschicht der Verpackungsschale und der bereichsweisen Ablösung der Außenschicht von der Innenschicht an der Verpackungsschale ausgebildet werden.

## Claims

1. A packing tray, thermoformed from a multilayer composite with liquid-impermeable outer layers in the form of a bottom layer and a top layer, with an absorbent inner layer arranged in between, bonded with good adhesive strength to the outer layers, with through-holes for liquid to pass through into the absorbent inner layer being formed at least in the top layer, and all the layers being produced on the basis of styrene polymers, **characterized in that** the two outer layers are formed from sheets of foam plastic with closed cells and the inner layer is formed from a sheet of foam plastic with at least partly open cells, and formed in the transitional region from the closed-cell foam plastic of the outer layers to the open-cell foam plastic of the inner layer there are cellular boundary layers, which are compacted with respect to the density of the foamed sheets of the outer layers and the inner layer and have a thickness of approximately 10-15% in relation to the thickness of the sheet used for forming the inner layer.

2. A packing tray according to claim 1, **characterized in that** the outer layers are opaque with respect to the inner layer.

3. A packing tray according to claim 1 or 2, **characterized in that** it has a weight per unit area of from 280 to 500 g/m², in particular 300 to 450 g/m².

4. A packing tray according to any one of claims 1 to 3, **characterized in that** a closed-cell foam sheet with a thickness of from 0.5 to 1.5 mm and a density of from 50 to 150 kg/m³, preferably 50 to 100 kg/m³, is used for the outer layers.

5. A packing tray according to any one of claims 1 to 4, **characterized in that** an at least partly open-cell foam sheet with a thickness of from 1 to 4 mm and a density of from 50 to 90 kg/m³ is used for the inner layer.

6. A packing tray according to any one of claims 1 to 5, **characterized in that** the thickness of the foam sheet used for the inner layer is 2 to 4 times the thickness of the foam sheet used for the outer layers.

7. A packing tray according to any one of claims 1 to 6, **characterized in that** the same foam sheet is used for both outer layers.

8. A packing tray according to any one of claims 1 to 7, **characterized in that** the at least partly open-cell inner layer is produced from a foam sheet containing:
for every 100 parts by weight of polystyrene
3 to 4 parts by weight of blowing agent, selected from the group of n-butane, n-pentane, iso-pentane or mixtures thereof,
0.6 to 1.5 parts by weight of nucleating agent selected from sodium bicarbonate and citric acid with a decomposition temperature > 160°C,
1.0 to 3.5 parts by weight of a surfactant which operates well in polar substances such as polystyrene, and
1 to 3 parts by weight of a foreign polymer immiscible with polystyrene, such as a polyolefin or EVA.

9. A packing tray according to claim 8, **characterized in that** the nucleating agent is used together with a polymer binder based on an acrylate polymer in a ratio of nucleating agent to polymer binder of 55:45 to 65:35.

10. A packing tray according to any one of claims 1 to 9, **characterized in that** the at least partly open-cell foam sheet contains as a surfactant 1 to 3 parts by weight of an alkane sulphonate for every 100 parts by weight of polystyrene.

11. A packing tray according to any one of claims 1 to 10, **characterized in that** a closed-cell foam sheet which contains as starting substances, for every 100 parts by weight of polystyrene,
5 to 8 parts by weight of blowing agent from the group of n-butane, n-pentane and iso-pentane, individually or in mixtures, and
0.3 to 0.6 part by weight of a nucleating agent based on citric acid and sodium bicarbonate
is used for the outer layers.

12. A packing tray according to any one of claims 1 to 11, **characterized in that** the polystyrene used for the production of the closed-cell foam sheets for the outer layers and/or the at least partly open-cell foam sheet for the inner layer contains up to 50% by weight of a regenerated polystyrene instead of fresh material.

13. A packing tray according to any one of claims 1 to 12, **characterized in that** the bottom layer has on its outer side an inwardly curved central bottom region with a planar area.

14. A packing tray according to any one of claims 1 to 13, **characterized in that**, adjoining the outer rim of the packing tray at the outer periphery, at least two bead-like ribs are formed in the bottom layer, which ribs project in parallel, run around the outer periphery and are formed such that they decrease in their width and height in stages in the direction of the bottom region.

15. A method for producing a packing tray according to any one of claims 1 to 14, **characterized in that**, in a first step, a mixture containing, for every 100 parts by weight of polystyrene,
1 to 2.5 parts by weight of a polymer-bound nucleating agent based on sodium bicarbonate and citric acid,
1.0 to 3.5 parts by weight of a surfactant and
1 to 3 parts by weight of a foreign polymer which is immiscible with polystyrene,
is melted in a twin-screw extruder with co-rotating screws at a temperature of up to 270°C and
3 to 4% by weight of blowing agent, in particular n-butane, in relation to the amount of polystyrene used, is injected into the polymer melt under a pressure of from 30 to 150 bar and the polymer melt is brought to a material temperature of between 160 and 180°C while being homogeneously mixed before leaving the twin-screw extruder into the die tool with an annular die, and is extruded under a pressure of up to 55 bar from the die as a parison into the atmosphere, the parison is drawn over a calibrating mandrel while expanding and, after cooling, is opened out and laid flat, a one-layer foam sheet of a thickness of from 1 to 4 mm and a density of from 50 to 90 kg/m³ with a partly open-cell structure being obtained, and subsequently, in a second step, a closed-cell foam sheet of a styrene polymer is respectively used for the top layer and the bottom layer, and the at least partly open-cell foam sheet is arranged as an inner layer between the top layer and the bottom layer forming the outer layers, and all the foam sheets are fed to a bonding gap formed by two rollers and, before running into the bonding gap, the mutually facing surfaces of the outer layer and the inner layer or the inner layer and the bottom layer are made to become plastic and begin melting by means of hot air at between 350°C and 450°C, and, as they run through the bonding gap, the foam sheets are laminated to form the multilayer composite, with the boundary layers between the inner layer and the top layer or the inner layer and the bottom layer being formed by compaction of the cellular, in particular partly open-cell foam structures, after which the multilayer composite is passed over a pin roller, on its side that is formed by the top layer, and small holes are produced, penetrating the top layer and ending inside the adjacent inner layer, and, while being warmed to a temperature adequate for thermoforming, the multilayer composite provided with the holes is fed to a mould for the packing trays, and the packing trays are produced by thermoforming with pressure being applied, the boundary layers having a thickness of approximately 10-15% in relation to the thickness of the sheet used for forming the inner layer.

16. A method for producing a packing tray according to claim 15, **characterized in that** the same foam sheets are used for the top layer and the bottom layer, the foam sheet for the top layer and the foam sheet for the bottom layer being arranged in a mirror-inverted manner in the multilayer composite in relation to their production, when viewed in cross section.

17. A method according to either one of claims 15 and 16, **characterized in that** a multi-cavity mould tool is used for the packing tray, with a female mould and a male mould, which tool is formed in the region of the female mould with machined grooves for the forming of bead-like ribs on the outer periphery of the packing tray, and negative pressure is produced in the region of the grooves during the thermoforming of the multilayer composite and the bead-like ribs are formed on the adjacent bottom layer of the packing tray and the detachment in certain areas of the outer layer from the inner layer is achieved for the packing tray.

## Revendications

1. Barquette obtenue par emboutissage profond d'un composite multicouche, comportant des couches externes imperméables aux liquides, sous la forme d'une couche de fond et d'une couche de recouvrement, et, disposée entre elles, une couche interne absorbante, reliée solidement aux couches externes, des trous continus étant pratiqués au moins dans la couche de recouvrement pour faire passer les liquides dans la couche interne absorbante, toutes les couches étant à base de polymère styrénique, barquette **caractérisée en ce que** les deux couches externes sont constituées de feuilles de matière plastique en mousse à cellules fermées et la couche interne est constituée d'une feuille de matière plastique en mousse à cellules ouvertes au moins en partie, et, dans la zone de transition allant de la matière plastique en mousse à cellules fermées des couches externes à la matière plastique en mousse à cellules ouvertes de la couche interne, sont formées des couches-limites cellulaires, plus denses que les feuilles en mousse des couches externes et de la couche interne, qui présentent une épaisseur d'environ 10% à environ 15% de l'épaisseur de la feuille utilisée pour la formation de la couche interne.

2. Barquette selon la revendication 1, **caractérisée en ce que** les couches externes sont opaques par rapport à la couche interne.

3. Barquette selon la revendication 1 ou 2, **caractérisée en ce qu'**elle présente un poids par unité de surface de 280 à 500 g/m², en particulier de 300 à 450 g/m².

4. Barquette selon l'une quelconque des revendications 1 à 3, **caractérisée en ce qu'**on utilise pour les couches externes une feuille de mousse à cellules fermées, ayant une épaisseur de 0,5 à 1,5 mm et une masse volumique de 50 à 150 kg/m³, de préférence de 50 à 100 kg/m³.

5. Barquette selon l'une quelconque des revendications 1 à 4, **caractérisée en ce qu'**on utilise pour la couche interne une feuille de mousse à cellules ouvertes au moins en partie, ayant une épaisseur de 1 à 4 mm et une masse volumique de 50 à 90 kg/m³.

6. Barquette selon l'une quelconque des revendications 1 à 5, **caractérisée en ce que** l'épaisseur de la feuille de mousse utilisée pour la couche interne atteint 2 à 4 fois l'épaisseur de la feuille de mousse utilisée pour les couches externes.

7. Barquette selon l'une quelconque des revendications 1 à 6, **caractérisée en ce qu'**on utilise la même feuille de mousse pour les deux couches externes.

8. Barquette selon l'une quelconque des revendications 1 à 7, **caractérisée en ce que** la couche interne à cellules ouvertes au moins en partie, est préparée à partir d'une feuille de mousse contenant pour 100 parties en poids de polystyrène :
3 à 4 parties en poids d'un agent de gonflement pris parmi le n-butane, le n-pentane, l'isopentane et leurs mélanges,
0,6 à 1,5 partie en poids d'un agent de nucléation constitué de bicarbonate de sodium et d'acide citrique, ayant une température de décomposition supérieure à 160°C,
1,0 à 3,5 parties en poids d'un tensio-actif bien actif dans des substances polaires comme le polystyrène, et
1 à 3 parties en poids d'un polymère étranger, non miscible au polystyrène, comme une polyoléfine ou un copolymère d'éthylène et d'acétate de vinyle (EVA).

9. Barquette selon la revendication 8, **caractérisée en ce que** l'agent de nucléation est utilisé avec un liant de nature polymère, à base d'un polymérisat d'acrylate, selon un rapport de l'agent de nucléation au liant de nature polymère de 55 : 45 à 65 : 35.

10. Barquette selon l'une quelconque des revendications 1 à 9, **caractérisée en ce que** la feuille de mousse à cellules ouvertes au moins en partie, contient comme tensio-actif, 1 à 3 parties en poids d'un alkylsulfonate pour 100 parties en poids de polystyrène.

11. Barquette selon l'une quelconque des revendications 1 à 10, **caractérisée en ce qu'**on utilise pour les couches externes une feuille de mousse à cellules fermées, qui contient comme produits de départ, pour 100 parties en poids de polystyrène :
5 à 8 parties en poids d'un agent de gonflement pris parmi le n-butane, le n-pentane, l'isopentane et leurs mélanges, et
0,3 à 0,6 partie en poids d'un agent de nucléation à base d'acide citrique et de bicarbonate de sodium.

12. Barquette selon l'une quelconque des revendications 1 à 11, **caractérisée en ce que** le polystyrène utilisé pour la préparation des feuilles de mousse à cellules fermées pour les couches externes et/ou de la feuille de mousse à cellules ouvertes au moins en partie, pour la couche interne, contient jusqu'à 50% en poids d'un polystyrène de régénération à la place d'une matière fraîche.

13. Barquette selon l'une quelconque des revendications 1 à 12, **caractérisée en ce que** la couche de fond présente sur son côté externe une zone de fond centrale, à surface plane, bombée vers l'intérieur.

14. Barquette selon l'une quelconque des revendications 1 à 13, **caractérisée en ce que** sont formées dans la couche de fond, sur le pourtour externe faisant suite au bord externe de la barquette, au moins deux nervures parallèles en forme de bourrelet, faisant saillie par rapport au pourtour externe, qui sont disposées en étages et dont la largeur et la hauteur vont en décroissant dans la direction de la zone de fond.

15. Procédé de préparation d'une barquette selon l'une quelconque des revendications 1 à 14, **caractérisé en ce que**, dans une première étape, on fait fondre à une température allant jusqu'à 270°C, dans une extrudeuse à deux vis sans fin tournant dans le même sens, un mélange contenant pour 100 parties en poids de polystyrène :
1 à 2,5 parties en poids d'un agent de nucléation à base de bicarbonate de sodium et d'acide citrique, lié à un polymère,
1,0 à 3,5 parties en poids d'un tensio-actif, et
1 à 3 parties en poids d'un polymère étranger, non miscible au polystyrène,
on injecte dans la masse polymère fondue 3 à 4% en poids d'un agent de gonflement, en particulier de n-butane, par rapport à la quantité utilisée de polystyrène, sous une pression de 30 à 150 bars, et on amène la masse polymère fondue, en la mélangeant pour l'homogénéiser à une température de la masse comprise entre 160 et 180°C, dans le dispositif à filière en forme d'anneau, placé avant la sortie de l'extrudeuse à deux vis, on extrude par la filière dans l'atmosphère, sous une pression allant jusqu'à 55 bars, la masse fondue sous la forme d'un tuyau, on étire le tuyau par l'intermédiaire d'une broche de calibrage pendant l'expansion et, après refroidissement, on découpe le tuyau en l'ouvrant et on le place à plat, grâce à quoi on obtient une feuille de mousse monocouche ayant une épaisseur de 1 à 4 mm et une masse volumique de 50 à 90 kg/m³, et ayant une structure à cellules en partie ouvertes,
et ensuite, dans une deuxième étape, on utilise pour la couche de fond et la couche de recouvrement une feuille de mousse à cellules fermées en polymère styrénique, on place la feuille de mousse à cellules ouvertes au moins en partie, en tant que couche interne, entre la couche de fond et la couche de recouvrement formant les couches externes, on amène toutes les feuilles de mousse à un interstice de liaison formé par deux cylindres et, avant l'introduction dans l'interstice de liaison, on rend plastiques et on fait fondre au moyen d'air chaud, à une température comprise entre 350°C et 450°C, les surfaces orientées l'une vers l'autre de la couche de recouvrement et de la couche interne, et de la couche interne et de la couche de fond, on stratifie les feuilles de mousse lors du passage à travers l'interstice de liaison en formant ainsi le composite multicouche et en formant les couches-limites entre la couche interne et la couche de recouvrement, et entre la couche interne et la couche de fond, par densification des structures en mousse cellulaires, en particulier de la structure en mousse à cellules ouvertes au moins en partie, après quoi on amène le composite multicouche, sur son côté formé par la couche de recouvrement, sur un cylindre à aiguilles, et on forme des petits trous qui traversent la couche de recouvrement et se terminent à l'intérieur de la couche interne adjacente, puis on amène le composite multicouche muni des trous, en le préchauffant à une température suffisante pour l'emboutissage profond, à un moule de formage des barquettes, et on prépare les barquettes par emboutissage profond sous pression, les couches-limites ayant une épaisseur d'environ 10% à environ 15% de l'épaisseur de la feuille utilisée pour la formation de la couche interne.

16. Procédé de préparation d'une barquette selon la revendication 15, **caractérisé en ce qu'**on utilise des feuilles de mousse identiques pour la couche de recouvrement et la couche de fond, les feuilles de mousse pour la couche de recouvrement et la couche de fond étant disposées dans le composite multicouche, de manière inversée en section droite considérée par rapport à leur préparation.

17. Procédé selon la revendication 15 ou 16, **caractérisé en ce qu'**on utilise pour les barquettes un moule de formage à empreintes multiples, à matrice et poinçon, qui comporte sur la matrice des gorges façonnées pour la formation de nervures en forme de bourrelets sur le pourtour externe de la barquette, et, pendant l'emboutissage profond du composite multicouche, on produit une dépression dans la zone des gorges et on forme les nervures en forme de bourrelets sur la barquette, sur la couche de fond contiguë de la barquette, par séparation locale de la couche externe de la couche interne.
